# EUROPEAN PATENT APPLICATION

(11) **EP 0 551 136 A1**
(43) Date of publication of application: **14.07.1993**
(21) Application number: 93100284.4
(22) Date of filing: 11.01.1993
(51) Int. Cl.: G02F 1/17

(54) **Light-polarizing materials, and method for manufacturing the materials**

(30) Priority: 10.01.1992 KR 25992; 01.07.1992 KR 1165992
(71) Applicant: HANKUK GLASS INDUSTRIES, INC., Seoul (KR)
(72) Inventor: LEE, Jeong Hoon, Seoul (KR); YU, Byung Seok, Puk-Ku Inchon (KR)
(74) Representative: Patentanwälte Beetz - Timpe - Siegfried Schmitt-Fumian - Mayr

(57) **Abstract**

Light polarizing particles for a dispersion in a polymeric matrix are preferably produced by reaction of an iodine compound and one of hydroxyquinoline, dihydrocinchonidine sulfate, pyrazine-2,3-dicarboxylic acid, pyrazine-2,5-dicarboxylic acid, pyridine-2,5-dicarboxylic acid, and 2-hydroxypyridine in a solution with a polymeric dispersant which is incompatible with the polymeric matrix.

## Description

### Technical Field

The present invention relates to light polarizing materials for use in the manufacture of a light polarizing suspension for a light valve, and to a process for making such materials. More particularly, the invention relates to light polarizing materials in a light polarizing liquid suspension for film-type light valves, having microdroplets or interconnected structure, and to a process for making such materials.

### Background Art

A light valve was invented and patented by Edwin H. Land (U.S. Patent Nos. 1,951,664 and 1,955,923). Land's light valve is a cell comprising two substrates, with at least one of them being transparent. The substrates bear electrodes, usually in the form of a transparent conductive oxide (TCO) coating. The substrates, which form the walls of the cell, are spaced a small distance apart. The cell contains a suspension of small particles in a liquid suspending medium. In the absence of an applied electric field, the particles in the liquid suspension exhibit random Brownian motion, and a beam of light passing into the cell is reflected, transmitted or absorbed depending upon the nature and concentration of the particles and the energy content of the light. When an electric field is applied through the suspension, the particles become aligned parallel to the electric field, and most of the light can pass through the cell. Difficulties with these early light valves included particle settling, particle clustering, color change by heat, reduction of off-state optical density, and degradation by ultraviolet (UV) light, so that suspended-particle light valves have not heretofore been developed into practical commercial devices.

Some of these difficulties, such as particle settling, particle clustering, color change by heat, and reduction of off-state optical density have been solved by R.L. Saxe (U.S. Patent Nos. 3,756,700; 4,247,175; 4,273,422; 4,407,565; and 4,422,963), F.C. Lowell (U.S. Patent No. 3,912,365), and R.I. Thompson (U.S. Patent No. 4,078,856). Here, light valves contained a liquid suspension of solid particles of colloidal size, a polymeric system for helping to disperse the particles in the liquid, and a polymeric stabilizer. Mentioned difficulties were overcome by matching of the densities of suspended particles and suspending medium, and by adding the polymeric stabilizer.

However, with particles in liquid suspension, and when the vertical dimension of a cell is large, hydrostatic pressure of the liquid suspension causes a pressure difference between the upper and the lower of a cell. Resulting net outward forces on the substrates cause bowing and distortion of the substrates into non-planar surfaces. Bowing or distortion in turn leads to non-uniform suspension thickness and non-uniform optical density across the cell. Also, when such light valves are used as windows for buildings, a corresponding inward-bowing effect can result due to wind or difference in pressure between inside and outside a building. Other disadvantages are degradation due to UV-radiation, difficulties in filling or pouring the liquid suspension to a cell, agglomeration of particles in suspension, leaking of the suspension due to failure of a seal, and unequal response time and optical density due to a voltage drop from an edge to the middle of a TCO-substrate.

J. Fergason (U.S. Patent Nos. 4,435,047; 4,579,423; and 4,616,903) and J.L. West (U.S. Patent No. 4,685,771) invented films comprising microdroplets of a liquid-crystal material dispersed in a polymeric matrix. In these films, micron-size liquid-crystal droplets are dispersed in and surrounded by polymeric material. In the absence of an applied field, light passing through the film is strongly forward-scattered, giving the film a milky translucent appearance. When an electric field is applied, the liquid-crystal molecules become aligned and the film becomes transparent. Formation of uniform liquid-crystal droplets in a polymeric matrix can be achieved by one of a number of phase separation processes, involving, e.g., polymerization, thermal processing, solvent evaporation, or emulsifying.

The light valves invented by J. Fergason and J.L. West are milky translucent in the absence of an applied voltage. Their light scattering properties detract from their aesthetic appeal and thus limit their applicability to displays and windows. Furthermore, the liquid crystal partially interacts with the polymeric matrix, as a plasticizer and a mixture of several liquid-crystal materials is used. As a result, in the presence of an applied field, the transparent state remains milky because of a difference between the refractive indices of the liquid crystal and the polymeric matrix. Optical use as a light valve is limited to switching functions, between transparent and opaque states. Such a light valve can be used for curtainless windows and the like, but is not applicable for so-called smart windows, where continuous control of transmittance of solar radiation is required. Moreover, since liquid-crystal materials are affected by UV-radiation, a UV-blocking filter or UV-absorbing additive is necessary. Specifically with respect to nematic liquid-crystal materials, their applicability is limited because of temperature sensitivity.

### Summary of the Invention

It is an object of the present invention to provide light-polarizing materials and a process for making such materials, for use in the manufacture of film-type light valves which comprise microdroplets of a liquid suspension dispersed in a solid or semi-solid polymeric film.

It is a further object of the present invention to provide light-polarizing materials and a process for making such materials, for use in the manufacture of film-type light valves which comprise an interconnected structure of a liquid suspension dispersed in a polymeric film.

Preferred light-polarizing particles are produced by reaction of an iodine compound and one of hydroxyquinoline, dihydrocinchonidine sulfate, pyrazine-2,3-dicarboxylic acid, pyrazine-2,5-dicarboxylic acid, pyridine-2,5-dicarboxylic acid, and 2-hydroxypyridine in solution with a polymeric dispersant for the particles which is essentially incompatible with the polymeric matrix.

### Detailed Description of the Preferred Embodiments

Prior-art difficulties are alleviated forming a film comprising a liquid polarizing suspension dispersed in a polymeric matrix. In the absence of an AC-voltage applied to the film, particles in microdroplets and/or an interconnected structure of the liquid polarizing suspension exhibit random Brownian motion, and the film is dark blue due to the electro-dichroic effect of polarizing particles. When an AC-voltage is applied across the film, the particles in the liquid polarizing suspension become aligned parallel to the electric field, and, when the refractive indices of the polymeric matrix and the suspension are matched, the film becomes transparent. Preferred films are less prone to difficulties in filling or pouring the liquid suspension to a cell, agglomeration of particles in suspension, leaking of the suspension due to failure of a seal, and unequal response time and optical density due to a voltage drop from an edge to the middle of a TCO-substrate. A preferred suspension contains a fluoro-copolymer suspending medium, a polymeric stabilizer such as an acrylic copolymer, a UV-absorbing agent, and a dispersing agent. When a film is prepared from such a suspension by phase separation by polymerization, solvent evaporation, or thermal treatment, care is required to match the refractive indices of the liquid suspension and the polymeric matrix. Also, the particles should remain in the microdroplets segregated from the polymeric matrix, for proper alignment in an applied electric field. (When nitrocellulose was previously used in making the polarizing particles for good dispersion and for particle uniformity, light-polarizing particles could remain in the polymeric matrix because the polymer is almost compatible with nitrocellulose.)

A preferred polymeric dispersant, which enhances dispersion and uniformity of particles, can be selected form among poly(2-hydroxyethyl methacrylate),poly(acrylic acid), cellulose acetate, poly(hydroxypropyl acrylate), and nitrocellulose. With such a dispersant, the particles in the liquid suspension can be segregated from the polymeric matrix.

In the present invention, preferred size of the light-polarizing particles is less than 1 µm and preferably in a range from 0.1 to 0.3 µm, and the particles should be shaped like needles, laths, rods, or plates. When particle size is greater than 1 µm, a film may not be transparent even in the presence of a field, due to the electro-dichroic effect of particles in the polymeric matrix.

Light-polarizing particles of the present invention can be made as complex halides by reaction of a precursor (pyrazine-2,3-dicarboxylic acid, pyrazine-2,5-dicarboxylic acid, pyridine-2,5-dicarboxylic acid, hydroxyquinoline, dihydrocinchonidine sulfate, or 2-hydroxypyridine) with hydrogen iodide and iodine, in solution with a polymeric dispersant, e.g., poly(2-hydroxyethyl methacrylate), poly(acrylic acid), cellulose acetate, poly(hydroxypropyl acrylate), or nitrocellulose. The dispersant enhances the dispersion of the particles and is incompatible with the polymeric matrix.

Film-type light valves made with light-polarizing materials of the present invention can be used for controlling the transmission of solar radiation by an electric field. In the absence of an AC-voltage applied to the film, particles in microdroplets and/or an interconnected structure of the liquid polarizing suspension exhibit random Brownian motion, and the film is dark blue due to the electro-dichroic effect of polarizing particles. When an AC-voltage is applied across the film, the particles in the liquid polarizing suspension become aligned parallel to the electric field, and, when the refractive indices of a polymeric matrix and the suspension are matched, the film becomes transparent.

Furthermore, film-type light valves made with light-polarizing materials of the present invention overcome prior difficulties, e.g., degradation due to UV-radiation, difficulties in filling or pouring liquid suspension to a cell, agglomeration of particles in suspension, leaking of the suspension due to failure of a seal, and unequal response time and optical density due to a voltage drop from an edge to the middle of a TCO-substrate.

Film-type light valves made with a light-polarizing material of the present invention can be used for a large variety of applications, e.g., in automobile display devices, automobile windshields, automobile rear-view mirrors, windows for buildings, sunglasses, optical shutters, and flat-panel display devices.

Example 1(a). In a method for making light-polarizing particles suitable for a light-valve film, an amount of 10 grams of polymeric dispersant, namely poly(2-hydroxyethyl methacrylate) was dissolved in 100 grams of isoamyl acetate. To the solution, 5 grams of precursor, namely dihydrocinchonidine sulfate, 0.5 gram of CaI₂, 3 grams of I₂, and 5 grams of methyl alcohol were added. The resulting solution was mixed vigorously by mechanical stirring for 30 minutes and reacted in an ultrasonic bath for 5 hours. Blue-colored particles were formed readily. Mixing was then continued for an additional 5 hours. The resulting mixture was centrifuged at 10,000 RPM for 1 hour, and particles were collected having a size of 0.1 to 0.3 µm.

Example 1(b). A suspension was formed of the particles from Example 1(a) and an ester, for the determination of electrical properties as a function of particle concentration and of electrode gap. Applied voltages ranged from 30 to 300 volts RMS, at frequencies from 30 to 1000 hertz. Decay time was above 5-10 milliseconds, and rise time was about 2 to 5 milliseconds. Radiation transmittance was about 60 to 85% in the on-state, and about 0.5 to 20% in the off-state.

Example 2(a). For the preparation of light-polarizing particles suitable for a light-valve film, an amount of approximately 15 grams of polymeric dispersant, namely polyacrylic acid, was dissolved in 150 grams of isoamyl acetate. To this solution, 5 grams of precursor, namely pyrazine-2, 5-dicarboxylic acid, 0.5 grams of CaI₂, 3 grams of I₂, and 5 grams of methyl alcohol were added. The resulting solution was mixed vigorously by mechanical stirring for 30 minutes and reacted in an ultrasonic bath for 5 hours. Blue-colored particles were formed readily. Mixing was continued for an additional 5 hours. The resulting mixture was centrifuged at 10,000 RPM for 1 hours, and particles were collected having a size from 0.1 to 0.3 µm.

Example 2(b). A suspension was formed of the particles from Example 2(a) and an ester, for the determination of electrical properties as a function of particle concentration and of electrode gap. Applied voltages ranged from 30 to 300 volts RMS, at frequencies from 30 to 1000 hertz. Decay time was above 5-10 milliseconds, and rise time was about 2 to 5 milliseconds. Radiation transmittance was about 60 to 85% in the on-state, and about 0.5 to 20% in the off-state.

Examples 3-5. Example 1(a) was followed, except that cellulose acetate, poly(hydroxypropyl acrylate) and nitrocellulose were used as polymeric dispersant, with substantially the same result.

Examples 6-9. Example 1(a) was followed, except that hydroxyquinoline, pyrazine-2,3-dicarboxylic acid, pyridine-2,5-dicarboxylic acid, and 2-hydroxypyridine were used as precursor, with substantially the same result.

Example 10. Example 1(a) was followed, but the solution was first centrifuged at 15,000 RPM for 30 minutes and a sediment was collected. The sediment was combined with ester solution, 10 grams of ester solution per gram of sediment. The sediment was dispersed by ultrasonic agitation for 20 minutes, and the dispersion was centrifuged at 4,000 RPM for 5 minutes. The supernatant was collected and centrifuged at 10,000 RPM for 0.5 hours. A sediment was collected and found to consist of particles of size 0.2 to 0.5 µm. Again, a supernatant was centrifuged, and newly sedimented particles were of size 0.1 to 0.3 µm, i.e., particularly suitable as polarizing particles for a light-valve film.

## Claims

1. Light-polarizing particles for a dispersion in a polymeric matrix, made by reaction of an iodine compound and at least one precursor selected from the group consisting of hydroxyquinoline, dihydrocinchonidine sulfate, pyrazine-2,3-dicarboxylic acid, pyrazine-2,5-dicarboxylic acid, pyridine-2,5-dicarboxylic acid, and 2-hydroxypyridine in a solution with a polymeric dispersant which is essentially incompatible with the polymeric matrix.

2. Light-polarizing particles according to claim 1, wherein said polymeric dispersant is selected from the group consisting of poly(2-hydroxyethyl methacrylate), poly(acrylic acid), cellulose acetate, poly(hydroxypropyl acrylate) and nitrocellulose.

3. Light-polarizing particles according to claim 1, wherein particle size is less than 1 µm.

4. Light-polarizing particles according to claim 1, wherein particle size is in a range from 0.1 to 0.3 µm.

5. A method for making light-polarizing particles for a dispersion in a polymeric matrix, comprising a step of reacting an iodine compound and at least one precursor selected from the group consisting of hydroxyquinoline, dihydrocinchonidine sulfate, pyrazine-2,3-dicarboxylic acid, pyrazine-2,5-dicarboxylic acid, pyridine-2,5-dicarboxylic acid, and 2-hydroxypyridine in a solution with a polymeric dispersant which is essentially incompatible with the polymeric matrix.

6. The method according to claim 5, wherein said polymeric dispersant is selected from the group consisting of poly(2-hydroxyethyl methacrylate), Poly(acrylic acid), cellulose acetate, poly(hydroxypropyl acrylate), and nitrocellulose.

7. The method according to claim 5, wherein particle size is less than 1 µm.

8. The method according to claim 5, wherein particle size is in a range from 0.1 to 0.3 µm.

9. Light-polarizing particles, obtainable by the method of one of claims 5 to 8.

10. Use of the light-polarizing particles according to claims 1 to 4 and 9 in a film-type light valve.
